# FASCICULE DE BREVET EUROPEEN

(11) **EP 4 402 114 B1**
(45) Date de publication et mention de la délivrance du brevet: **25.06.2025**
(21) Numéro de dépôt: 22790259.0
(22) Date de dépôt: 15.09.2022
(51) Int. Cl.: C04B 28/08, C04B 38/10

(54) **MOUSSE MINÉRALE**
MINERALSCHAUM
MINERAL FOAM

(30) Priorité: 17.09.2021 FR 2109765
(43) Date de publication de la demande: 24.07.2024
(73) Titulaire: Saint-Gobain Weber France, 94370 Sucy en Brie (FR)
(72) Inventeur: BECQUET, Jeremy, 93303 AUBERVILLIERS CEDEX (FR)
(74) Mandataire: Saint-Gobain Recherche
(86) Numéro de dépôt international: PCT/EP2022/075689
(87) Numéro de publication internationale: WO 2023/041669

(56) Documents cités:
- WO-A1-2021/123349
- FR-A1- 3 103 484
- PHELIPOT-MARDELÉ ANNABELLE ET AL: "SUPER SULFATED CEMENT: FORMULATION AND USES", PROCEEDINGS OF THE FIFTH INTERNATIONAL CONFERENCE ON CONSTRUCTION MATERIALS: PERFORMANCE, INNOVATIONS AND STRUCTURA, 19 August 2015 (2015-08-19), XP055927668, Retrieved from the Internet <URL:https://www.researchgate.net/profile/Gabriel-Samson/publication/280830346_Super_sulfated_cement_formulation_and_uses/links/55c859a508aebc967df89723/Super-sulfated-cement-formulation-and-uses.pdf> [retrieved on 20220602]
- BAUX CHRISTOPHE ET AL: "MINERAL FOAMS WITH IMPROVED PERFORMANCES", ANNALES DU BÂTIMENT ET DES TRAVAUX PUBLICS, 1 February 2011 (2011-02-01), Paris, pages 53 - 57, XP055927694, Retrieved from the Internet <URL:https://hal.archives-ouvertes.fr/hal-00726496/file/ABTP_1-2011_pp53_57.pdf> [retrieved on 20220602]

## Description

L'invention se rapporte au domaine de la construction. Elle concerne plus particulièrement la fabrication de matériaux thermiquement isolants.

En plus de ses avantages en termes de confort et d'économie, l'isolation thermique des bâtiments, aussi bien en construction qu'en rénovation, constitue un enjeu primordial dans la lutte contre le réchauffement climatique. Il est donc essentiel que les éléments de construction possèdent la plus faible conductivité thermique possible. Pour répondre à cette problématique, un grand nombre de solutions techniques ont été proposées, qui mettent en œuvre des éléments isolants divers (laines minérales, mousses organiques etc...) associés à des éléments structurels (murs, toitures etc...).

Le document WO2021/123349 A1 divulgue des mousses de ciments sursulfatés présentant une masse volumique de 300 à 1000 kg/m³.

L'invention vise à proposer de nouveaux matériaux isolants et de nouvelles techniques de construction. Elle vise en particulier à proposer des matériaux non seulement performants mais aussi à plus faible empreinte carbone.

A cet effet, l'invention a pour objet une mousse minérale selon la revendication 1.

Un autre objet de l'invention est un procédé d'obtention d'une telle mousse minérale, selon la revendication 9.

L'invention a aussi pour objet un élément de construction comprenant au moins une cavité remplie au moins partiellement par une mousse minérale selon l'invention.

On entend par « mousse minérale » un matériau minéral alvéolaire ou cellulaire. Les alvéoles ou cellules sont de préférence remplies d'air. La taille des alvéoles ou cellules est de préférence d'au plus 400 µm, notamment au plus 250 µm. La proportion volumique d'air dans la mousse est de préférence comprise entre 40 et 95%, notamment entre 50 et 80% (en ne prenant pas en compte l'air compris dans les éventuels granulats légers poreux décrits dans la suite du texte).

Un ciment sursulfaté est un liant hydraulique à base de laitier de haut-fourneau granulé broyé et d'une source de sulfate de calcium. De manière surprenante, l'utilisation d'un tel ciment s'est révélée particulièrement adaptée à la fabrication de mousses minérales. Sans vouloir être liés par une quelconque théorie scientifique, il semblerait que, grâce à une prise plus rapide que celle des ciments Portland, il soit possible d'obtenir une mousse plus stable et donc d'obtenir plus aisément des masses volumiques particulièrement faibles.

Le ciment sursulfaté comprend (notamment consiste en) de préférence de 75 à 85% en poids, notamment de 80 à 85% en poids, de laitier de haut-fourneau granulé broyé, de 10 à 25% en poids, notamment de 10 à 20% en poids, d'une source de sulfate de calcium et de 0 à 5% en poids, notamment de 1 à 5% en poids, d'un activateur. Le ciment sursulfaté comprend de préférence au moins 80% en poids de laitier de haut-fourneau granulé broyé, au plus 20% en poids d'une source de sulfate de calcium et de 1 à 5% en poids d'activateur.

Le laitier de haut-fourneau granulé broyé possède de préférence une finesse Blaine comprise entre 3000 et 15000 cm²/g. Les laitiers plus fins (donc de finesse Blaine plus élevée) permettent de réduire le temps de prise, mais leur empreinte carbone est plus élevée, du fait d'un temps de broyage plus élevé.

La source de sulfate de calcium est de préférence choisie parmi le gypse, l'anhydrite, l'hémihydrate et les mélanges de deux ou plus de ces composés.

L'activateur est de préférence choisi parmi le clinker Portland, la chaux et les mélanges de ces composés.

Le ciment sursulfaté est normalement le seul liant hydraulique compris dans la composition hydraulique.

Selon un mode de réalisation préféré, la composition hydraulique ne comprend pas de granulats. En d'autres termes, la composition hydraulique est constituée de ciment sursulfaté et d'éventuels additifs, qui seront décrits dans la suite du texte.

Selon un autre mode de réalisation, la composition hydraulique comprend en outre des granulats légers, c'est-à-dire ayant une masse volumique apparente inférieure à 400 kg/m³, notamment inférieure à 300 kg/m³, voire inférieure à 200 kg/m³. La teneur en granulats légers est notamment comprise entre 1 et 50% en poids, notamment de 2 à 30% en poids, voire de 5 à 25% en poids. La composition hydraulique est de préférence exemple de granulats lourds, c'est-à-dire de granulats ayant une masse volumique apparente de 200 kg/m³ et plus.

Les granulats légers sont de préférence choisis parmi la perlite, la vermiculite, les billes de verre expansé, les billes de polystyrène expansé, les cénosphères, les silicates expansés, les aérogels et les mélanges de deux ou plus de ces composés.

Pour assurer une bonne stabilité de la mousse, la taille maximale des granulats est avantageusement d'au plus 1 mm, voire d'au plus 0,1 mm. La taille maximale peut être vérifiée par exemple par tamisage.

La composition hydraulique peut en outre comprendre au moins un additif, notamment choisi parmi les plastifiants, les superplastifiants, les épaississants, les accélérateurs, les retardateurs, les agents moussants et les polymères redispersables.

La teneur en superplastifiants est de préférence d'au plus 1% en poids, par exemple comprise entre 0,01 et 0,5% en poids, par rapport à la quantité de ciment sursulfaté.

Les accélérateurs et retardateurs permettent d'ajuster le temps nécessaire à la prise et au durcissement du liant hydraulique. L'éventuel retardateur est par exemple choisi parmi les acides carboxyliques, notamment l'acide tartrique ou l'acide citrique. Les accélérateurs sont notamment de chlorures de calcium, des nano-cristaux de silicate de calcium hydraté, ou encore du gypse finement broyé. La teneur en accélérateurs est de préférence d'au plus 5% en poids, par exemple comprise entre 0,1 et 3% en poids, par rapport à la quantité de ciment sursulfaté. La teneur en retardateurs est de préférence d'au plus 5% en poids, par exemple comprise entre 0,1 et 3% en poids, par rapport à la quantité de ciment sursulfaté.

Les polymères redispersables sont par exemple des (co)polymères vinyliques et/ou acryliques, par exemple des copolymères styrène-acrylique. Les polymères redispersables permettent d'améliorer la cohésion de la matrice minérale et donc la résistance à l'abrasion et à la traction, ainsi que de conférer des caractéristiques hydrophobes. La teneur en polymères redispersables est de préférence d'au plus 50% en poids, par exemple comprise entre 2 et 10% en poids, par rapport à la quantité de ciment sursulfaté.

La masse volumique de la mousse minérale est de préférence inférieure ou égale à 200 kg/m³, voire inférieure ou égale à 150 kg/m³. Il s'agit ici de la masse volumique après durcissement complet, généralement après 28 jours. La masse volumique de la mousse est généralement supérieure ou égale à 50 kg/m³, voire supérieure ou égale à 100 kg/m³.

Le procédé selon l'invention comprend le mélange d'une composition hydraulique comprenant un ciment sursulfaté avec de l'eau (dite « eau de gâchage ») afin d'obtenir une pâte, puis le mélange de la pâte obtenue avec une mousse aqueuse ou avec une solution contenant un agent générateur de gaz. Le rapport massique entre la quantité d'eau de gâchage et la quantité de ciment sursulfaté est de préférence comprise entre 0,3 et 0,6.

Selon un premier mode de réalisation, l'obtention de la mousse minérale comprend une étape d'obtention d'une mousse aqueuse puis une étape de mélange de ladite mousse aqueuse avec la pâte. Dans ce cas la mousse minérale est obtenue par le mélange de la pâte malaxée et de la mousse aqueuse. La mousse aqueuse est par exemple obtenue en mélangeant de l'eau et un agent moussant (ou un agent stabilisateur de mousse) puis en introduisant un gaz, notamment de l'air, par agitation, bullage ou encore injection sous pression. Le diamètre médian des bulles de la mousse aqueuse est de préférence d'au plus 400 µm, notamment d'au plus 250 µm.

L'agent moussant est par exemple un tensioactif. La mousse aqueuse comprend donc de préférence des tensioactifs.

Selon un exemple préféré, les tensioactifs sont des tensioactifs anioniques, notamment choisis parmi les alkylsulfates, les alkylsulfonates, les alkylethersulfates et les alkylarylsulfates. Ces tensioactifs se sont révélés particulièrement efficaces car ils n'influent pas négativement sur le temps de prise. Le tensioactif est par exemple un alkylethersulfate de sodium.

D'autres exemples de tensioactifs sont les tensioactifs issus de protéines ou d'acides aminés ou les tensioactifs cationiques (comme le CTAB, bromure de cétyltriméthylammonium). Ces tensioactifs sont toutefois moins préférés car ils retardent fortement la prise du ciment.

Le mélange de la pâte et de la mousse aqueuse est de préférence réalisé dans un mélangeur statique, notamment de type hélicoïdal.

Le rapport entre le volume de mousse aqueuse ajoutée et le volume de pâte est compris entre 5 et 20, notamment entre 6 et 15. Par exemple, pour une masse volumique après durcissement de 100 kg/m³, le rapport entre le volume de mousse aqueuse ajoutée et le volume de pâte minérale est typiquement de l'ordre de 10.

Selon un deuxième mode de réalisation, l'obtention de la mousse minérale comprend le mélange de la pâte avec une solution contenant un agent générateur de gaz. Un tel agent générateur de gaz est par exemple une poudre métallique (par exemple d'aluminium, zinc, silicium...) capable de réagir avec l'eau et les hydroxydes.

De manière préférée, l'agent générateur de gaz est un peroxyde, par exemple le peroxyde d'hydrogène. Le peroxyde est de préférence mis en contact avec un catalyseur afin de générer de l'oxygène gazeux. Le catalyseur est notamment un sel de métal de transition, en particulier de manganèse (permanganates, manganates...), ou encore de fer, de cobalt, de cuivre, de molybdène, de tungstène ou de chrome. Le catalyseur ou un précurseur de ce catalyseur peut être présent dans la composition hydraulique, ou être ajouté en solution, avec l'eau de gâchage ou encore avec la solution de peroxyde.

Le mélange de la pâte et de la solution contenant un agent générateur de gaz est de préférence réalisé dans un mélangeur statique, notamment de type hélicoïdal.

L'élément de construction selon l'invention comprend au moins une cavité remplie au moins partiellement (et de préférence totalement) par la mousse minérale.

Un tel élément est par exemple un mur ou un élément de mur, ou encore un plancher ou élément de plancher. Les éléments de construction peuvent être des éléments préfabriqués, destinés à être assemblés sur le chantier de construction, par exemple au moyen d'un mortier, afin de former les murs extérieurs ou intérieurs (par exemple les murs de refend) d'un bâtiment.

La fabrication de l'élément de construction comprend une étape de remplissage au moins partiel d'au moins une cavité par la mousse selon l'invention. Cette étape sera normalement réalisée avant prise, de manière à pouvoir couler ou encore projeter la mousse encore à l'état fluide (pâteux ou liquide) à l'intérieur de la cavité.

L'étape de remplissage peut être continue ou discontinue. Dans le cas d'un procédé continu, la composition hydraulique mélangée à l'eau de gâchage est malaxée et pompée, puis la mousse aqueuse ou la solution contenant un agent générateur de gaz est ajoutée, notamment dans un mélangeur statique, et le mélange obtenu est pompé et acheminé vers un dispositif de coulage ou de projection déplacé manuellement ou automatiquement.

Le remplissage de la ou de chaque cavité par la mousse minérale selon l'invention permet d'atteindre d'excellentes propriétés d'isolation thermique.

De par la présence d'une importante quantité de gaz, en particulier d'air, emprisonnée dans une matrice minérale (ciment ou mortier), la mousse présente une faible conductivité thermique, notamment en réduisant les transferts thermiques par convection et par conduction. La conductivité thermique de la mousse minérale (après durcissement) est de préférence d'au plus 0,10 W/m.K, notamment d'au plus 0,08 W/m.K, par exemple comprise entre 0,030 et 0,060 mW/m.K.

La ou chaque cavité est avantageusement délimitée par des parois en mortier ou béton obtenues par fabrication additive. Dans ce cas l'étape de remplissage des cavités par la mousse peut être intégrée à la fabrication des parois, par exemple réalisée au moyen du même robot.

Les exemples qui suivent illustrent l'invention de manière non-limitative.

Une composition hydraulique a été obtenue en mélangeant 80% de laitier de haut-fourneau granulé broyé (Ecocem, finesse Blaine de 12000 cm²/g), 15% d'hémihydrate de sulfate de calcium (Molda 3, Saint-Gobain Formula) et 5% de ciment Portland 52.5R (Lafarge, finesse Blaine de 4500 cm²/g).

Cette composition a ensuite été gâchée avec de l'eau avec un taux de gâchage de 35% (c'est-à-dire avec un rapport massique eau/composition de 0,35) et malaxée pendant 2 minutes.

La pâte obtenue a ensuite été mélangée (pendant 1 minute) avec une mousse aqueuse comprenant 3% de tensioactifs anioniques (alkylétherssulfates ; Steol^{®} DES 32).

La mousse aqueuse a été obtenue dans un mélangeur à rotor-stator, la densité de la mousse étant réglée par la quantité d'air introduite dans le mélangeur. Le rapport entre la masse de mousse aqueuse ajoutée et la masse de la pâte (composition hydraulique après gâchage) était de 0,26.

Le temps de prise était de 10 minutes, soit le même temps qu'en absence de tensioactifs. A titre de comparaison, les temps de prise avec des tensioactifs à base de protéine (Propump 26) étaient beaucoup plus longs.

Le tableau 1 ci-après indique pour chacun des exemples 1 à 3 selon l'invention la densité de la mousse aqueuse (en g/L), la conductivité thermique de la mousse obtenue (en mW/m.K) et la masse volumique de la mousse obtenue (en kg/m³), après durcissement de 28 jours sous une humidité relative de 50%.

**[Tableaux 1]**

| | 1 | 2 | 3 |
|---|---|---|---|
| Densité mousse aqueuse | 50 | 75 | 100 |
| Conductivité thermique | 48 | 67 | 94 |
| Masse volumique | 125 | 180 | 250 |

## Revendications

1. Mousse minérale obtenue par hydratation et durcissement d'une composition hydraulique comprenant un ciment sursulfaté, la masse volumique de ladite mousse minérale après durcissement complet étant inférieure à 250 kg/m³.

2. Mousse minérale selon la revendication 1, telle que la composition hydraulique ne comprend pas de granulats.

3. Mousse minérale selon la revendication 1, telle que la composition hydraulique comprend en outre des granulats légers, notamment choisis parmi la perlite, la vermiculite, les billes de verre expansé, les billes de polystyrène expansé, les cénosphères, les silicates expansés, les aérogels et les mélanges de deux ou plus de ces composés.

4. Mousse minérale selon la revendication précédente, telle que la taille maximale des granulats est d'au plus 1 mm, notamment d'au plus 0,1 mm.

5. Mousse minérale selon l'une des revendications précédentes, telle que le ciment sursulfaté comprend de 75 à 85% en poids de laitier de haut-fourneau granulé broyé, de 10 à 25% en poids d'une source de sulfate de calcium et de 0 à 5% en poids d'un activateur.

6. Mousse minérale selon la revendication précédente, telle que le ciment sursulfaté comprend de 80 à 85% en poids de laitier de haut-fourneau granulé broyé, de 10 à 20% en poids d'une source de sulfate de calcium et de 1 à 5% en poids d'un activateur.

7. Mousse minérale selon l'une des revendications 5 ou 6, telle que l'activateur est choisi parmi le clinker Portland, la chaux et les mélanges de ces composés.

8. Mousse minérale selon l'une des revendications précédentes, dont la masse volumique est inférieure ou égale à 200 kg/m³.

9. Procédé d'obtention d'une mousse minérale selon l'une des revendications précédentes, comprenant le mélange d'une composition hydraulique comprenant un ciment sursulfaté avec de l'eau afin d'obtenir une pâte, puis le mélange de la pâte obtenue avec une mousse aqueuse ou avec une solution contenant un agent générateur de gaz, le rapport entre le volume de mousse aqueuse ajoutée et le volume de pâte étant compris entre 5 et 20.

10. Procédé selon la revendication précédente, dans lequel la mousse aqueuse comprend des tensioactifs.

11. Procédé selon la revendication précédente, dans lequel les tensioactifs sont des tensioactifs anioniques, notamment choisis parmi les alkylsulfates, les alkylsulfonates, les alkyléthersulfates et les alkylarylsulfates.

12. Procédé selon l'une des revendications 9 à 11, dans lequel le rapport entre le volume de mousse aqueuse ajoutée et le volume de pâte est compris entre 6 et 15.

13. Procédé selon l'une des revendications 9 à 12, dans lequel le mélange de la pâte et de la mousse aqueuse est réalisé dans un mélangeur statique, notamment de type hélicoïdal.

14. Elément de construction comprenant au moins une cavité remplie au moins partiellement par une mousse minérale selon l'une des revendications 1 à 6.

15. Elément de construction selon la revendication précédente, tel que la ou chaque cavité est délimitée par deux parois en mortier ou béton obtenues par fabrication additive.

## Patentansprüche

1. Mineralschaum, der durch Hydratisierung und Aushärtung einer hydraulischen Zusammensetzung gewonnen wird, umfassend einen übersulfatierten Zement, wobei die Dichte des Mineralschaums nach vollständiger Aushärtung weniger als 250 kg/m³ beträgt.

2. Mineralschaum nach Anspruch 1, wobei die hydraulische Zusammensetzung keine Granulate umfasst.

3. Mineralschaum nach Anspruch 1, wobei die hydraulische Zusammensetzung ferner leichte Granulate umfasst, insbesondere ausgewählt aus Perlit, Vermiculit, expandierten Glaskugeln, expandierten Polystyrolkugeln, Cenosphären, expandierten Silikaten, Aerogelen und Mischungen aus zwei oder mehr dieser Verbindungen.

4. Mineralschaum nach dem vorstehenden Anspruch, wobei die maximale Größe der Granulate höchstens 1 mm, insbesondere höchstens 0,1 mm beträgt.

5. Mineralschaum nach einem der vorstehenden Ansprüche, wobei der übersulfatierte Zement zu 75 bis 85 Gew.-% gemahlene granulierte Hochofenschlacke, zu 10 bis 25 Gew.-% eine Calciumsulfatquelle und zu 0 bis 5 Gew.-% einen Aktivator umfasst.

6. Mineralschaum nach dem vorstehenden Anspruch, wobei der übersulfatierte Zement zu 80 bis 85 Gew.-% gemahlene granulierte Hochofenschlacke, zu 10 bis 20 Gew.-% eine Calciumsulfatquelle und zu 1 bis 5 Gew.-% einen Aktivator umfasst.

7. Mineralschaum nach einem der Ansprüche 5 oder 6, wobei der Aktivator aus Portlandklinker, Kalk und Mischungen dieser Verbindungen ausgewählt ist.

8. Mineralschaum nach einem der vorstehenden Ansprüche, dessen Dichte kleiner als oder gleich 200 kg/m³ ist.

9. Verfahren zum Gewinnen eines Mineralschaums nach einem der vorstehenden Ansprüche, umfassend das Mischen einer hydraulischen Zusammensetzung, umfassend einen übersulfatierten Zement, mit Wasser, um eine Paste zu gewinnen, dann das Mischen der gewonnenen Paste mit einem wässrigen Schaum oder mit einer Lösung, die ein Gaserzeugungsmittel enthält, wobei das Verhältnis zwischen dem Volumen des zugegebenen wässrigen Schaums und dem Volumen der Paste zwischen 5 und 20 liegt.

10. Verfahren nach dem vorstehenden Anspruch, wobei der wässrige Schaum Tenside umfasst.

11. Verfahren nach dem vorstehenden Anspruch, wobei die Tenside anionische Tenside sind, insbesondere ausgewählt aus Alkylsulfaten, Alkylsulfonaten, Alkylethersulfaten und Alkylarylsulfaten.

12. Verfahren nach einem der Ansprüche 9 bis 11, wobei das Verhältnis zwischen dem Volumen des zugegebenen wässrigen Schaums und dem Volumen der Paste zwischen 6 und 15 liegt.

13. Verfahren nach einem der Ansprüche 9 bis 12, wobei das Mischen der Paste und des wässrigen Schaums in einem statischen Mischer, insbesondere von spiralförmiger Art, durchgeführt wird.

14. Bauelement, umfassend mindestens einen Hohlraum, der mindestens teilweise mit einem Mineralschaum nach einem der Ansprüche 1 bis 6 gefüllt ist.

15. Bauelement nach dem vorstehenden Anspruch, wobei der oder jeder Hohlraum durch zwei Mörtel- oder Betonwände begrenzt ist, die durch additive Fertigung gewonnen werden.

## Claims

1. Mineral foam obtained by hydration and hardening of a hydraulic composition comprising an oversulfated cement, the density of said mineral foam after complete hardening being less than 250 kg/m³.

2. Mineral foam according to claim 1, such that the hydraulic composition does not comprise aggregates.

3. Mineral foam according to claim 1, such that the hydraulic composition additionally comprises lightweight aggregates, in particular chosen from perlite, vermiculite, expanded glass beads, expanded polystyrene beads, cenospheres, expanded silicates, aerogels and mixtures of two or more of these compounds.

4. Mineral foam according to the preceding claim, such that the maximum size of the aggregates is at most 1 mm, in particular at most 0.1 mm.

5. Mineral foam according to any of the preceding claims, such that the oversulfated cement comprises from 75 to 85% by weight of ground granulated blast-furnace slag, from 10 to 25% by weight of a calcium sulfate source and from 0 to 5% by weight of an activator.

6. Mineral foam according to the preceding claim, such that the oversulfated cement comprises from 80 to 85% by weight of ground granulated blast-furnace slag, from 10 to 20% by weight of a calcium sulfate source and from 1 to 5% by weight of an activator.

7. Mineral foam according to one of claims 5 or 6, such that the activator is chosen from Portland clinker, lime and mixtures of these compounds.

8. Mineral foam according to any of the preceding claims, the density of which is less than or equal to 200 kg/m³.

9. Method for obtaining a mineral foam according to any of the preceding claims, comprising mixing a hydraulic composition comprising an oversulfated cement with water to obtain a paste, then mixing the paste obtained with an aqueous foam or with a solution containing a gas-generating agent, the ratio between the volume of added aqueous foam and the volume of paste being between 5 and 20.

10. Method according to the preceding claim, wherein the aqueous foam comprises surfactants.

11. Method according to the preceding claim, wherein the surfactants are anionic surfactants, in particular chosen from alkylsulfates, alkylsulfonates, alkylthersulfates and alkylarylsulfates.

12. Method according to any of claims 9 to 11, wherein the ratio between the volume of added aqueous foam and the volume of paste is between 6 and 15.

13. Method according to any of claims 9 to 12, wherein the paste and aqueous foam are mixed in a static mixer, in particular of the helical type.

14. Building element comprising at least one cavity at least partially filled with a mineral foam according to any of claims 1 to 6.

15. Building element according to the preceding claim, such that the or each cavity is delimited by two mortar or concrete walls obtained by additive manufacturing.
